# EUROPEAN PATENT SPECIFICATION

(11) **EP 3 589 508 B1**
(45) Date of publication and mention of the grant of the patent: **05.05.2021**
(21) Application number: 18712653.7
(22) Date of filing: 27.02.2018
(51) Int. Cl.: B60K 6/365, B60K 6/383, B60K 6/387, B60K 6/54

(54) **VEHICLE PROPULSION SYSTEM**
ANTRIEBSSYSTEM FÜR EIN FAHRZEUG
SYSTÈME DE PROPULSION DE VÉHICULE

(30) Priority: 28.02.2017 IT 201700022296
(43) Date of publication of application: 08.01.2020
(73) Proprietor: Consiglio Nazionale Delle Ricerche, 00185 Roma (IT)
(72) Inventor: DE SIMIO, Luigi, 82100 Benevento (IT); GAMBINO, Michele, 80125 Napoli (IT); IANNACCONE, Sabato, 83024 Monteforte Irpino (AV) (IT)
(74) Representative: Savoca, Agatino
(86) International application number: PCT/IB2018/051232
(87) International publication number: WO 2018/158682

(56) References cited:
- EP-A1- 1 097 830
- EP-A1- 2 216 193
- EP-A1- 2 387 510
- US-A1- 2007 093 341
- US-B1- 6 468 175

## Description

### TECHNICAL FIELD

The present invention relates, in general, to a vehicle propulsion system, comprising a heat engine and a transmission unit adapted to transmit to the vehicle wheels the power generated by the heat engine. In particular, the present invention relates to a vehicle propulsion system capable of ensuring an optimised management of the power flows between the engine and the transmission unit of the vehicle.

### PRIOR ART

Heat engines are characterised by high thermal efficiency values in more or less narrow areas of the operating range. Therefore, in order to reduce vehicle consumption in real road conditions, the heat engine is generally operated in those areas of the operating range, so as to exploit the maximum thermal efficiency of the engine.

To this end, complex hybrid propulsion systems have been developed, which are adapted to decouple the operating conditions of the heat engine from the road load. These hybrid propulsion systems generally provide for the use of electric motors to support, at least temporarily, the heat engine, for example to increase the maximum performance of the vehicle. Some known propulsion systems further provide for the use of planetary gear sets to connect the heat engine to the transmission unit.

A vehicle propulsion system according to the preamble of independent claim 1 is known from US 6 468 175 B1.

Further examples of vehicle propulsion systems are disclosed in US 2016/0176391 A1, US 2010/0113202 A1 and US 2007/093341 A1.

### SUMMARY OF THE INVENTION

It is an object of the present invention to provide a vehicle propulsion system which is simple, which allows energy recovery during the releasing phases of the heat engine and which impacts as little as possible on the current transmission architectures.

It is a further object of the present invention to provide a vehicle propulsion system which allows to transmit to the transmission unit, with a transmission ratio equal to one, all the power generated by the heat engine, without therefore modifying the torque and number of revolutions characteristics of the heat engine.

These and other objects are achieved according to the invention by virtue of a vehicle propulsion system having the features specified in independent claim 1.

A vehicle propulsion system according to the present invention comprises, in addition to the heat engine and the transmission unit, an auxiliary power unit adapted to store and/or release energy and a planetary gear set which is interposed between the heat engine and the transmission unit and is connected to the auxiliary power unit, a locking device which is associated with the planetary gear set and is shiftable between a first position, in which the auxiliary power unit does not exchange power with the planetary gear set, and a second position, in which the auxiliary power unit is capable of exchanging power with the planetary gear set, and a braking device which is interposed between the planetary gear set and the heat engine and is configured to modulate the motion resistance torque of the heat engine.

Such a propulsion system is capable of drawing part of the kinetic energy of the vehicle during the releasing phases, for example during deceleration or during downhill driving using engine braking, when the heat engine generally does not generate power. During such phases, the system allows to recover part of the kinetic energy which would usually be dissipated by the heat engine driven by the vehicle. In other words, the system allows to decouple the speed of the vehicle from that of the heat engine, so that the heat engine may be driven at a rotational speed lower than that at which it would otherwise be driven, and therefore absorb less energy. The amount of kinetic energy or potential energy of the vehicle which is no longer dissipated by the heat engine being driven by the vehicle is transferred to a shaft and conveyed towards the auxiliary power unit. This allows to obtain the advantage of generating mechanical energy available on a shaft, without significantly altering the course of the vehicle speed during the releasing manoeuvre.

The provision of the planetary gear set between the heat engine and the transmission unit does not change either the transmission ratio or the operation of the transmission unit during the traction phases, but causes the inversion of the direction of rotation. Therefore, the application of the invention to existing propulsion systems (both with manual transmission and with automatic transmission) only requires the inversion of the direction of rotation of the heat engine or of the transmission unit, at the design stage, as well as the modification of the layout of the system to allow to arrange the planetary gear set between the heat engine and the transmission unit.

The planetary gear set also allows to draw mechanical energy during the normal operation of the heat engine, during the traction phases. In such case, part of the mechanical energy made available by the heat engine may be drawn before being converted into kinetic energy of the vehicle.

The main advantages achievable with the propulsion system of the invention are of energy and environmental type, due to the possibility of reducing fuel consumption by using the energy made available by the vehicle during the deceleration phases.

The possibility of implementing the propulsion system of the invention on already existing architectures, by only modifying the layout and the direction of rotation of the heat engine or of the transmission unit, offers further advantage in terms of rapid industrialization and applicability of the propulsion system.

Furthermore, the possibility of configuring the propulsion system according to different arrangements with increasing complexity offers the further advantage of allowing to choose the most suitable configuration, also in terms of costs, depending on the final use or destination.

In addition, the system is suitable for carrying out different manoeuvres allowed by hybrid systems, such as the so-called start & stop, the energy recovery during braking or the driving with the heat engine being stopped, for example by acting on the modulation of the motion resistance torque of the heat engine and on the use of the resulting reaction torque available on the planet carrier of the planetary gear set.

The propulsion system is also suitable for recovering energy also during the vehicle starting phases as well as for performing the synchronization of the gears of the transmission unit during the gear shift manoeuvres.

### BRIEF DESCRIPTION OF THE DRAWINGS

Some preferred embodiments of a vehicle propulsion system according to the invention will now be described with reference to the accompanying drawings, in which:
Figure 1 shows a diagram of the propulsion system according to an embodiment of the invention;
Figures 2A to 2D show some operating modes of the propulsion system of Figure 1, where the arrows indicate the directions of rotation of the components of the system;
Figures 3A and 3B show further operating modes of the propulsion system of Figure 1; and
Figure 4 is a schematic representation of the planetary gear set of the propulsion system of Figure 1.

### DETAILED DESCRIPTION OF EMBODIMENTS OF THE INVENTION

Before describing in detail some embodiments of the invention, it is pointed out that the invention is not to be construed as being limited to the constructional details and the configuration of the components disclosed in the following description or shown in the accompanying drawings. The invention may be implemented in other embodiments and carried out in other ways. It is also understood that the phraseology and terminology used herein have merely descriptive purposes and are not to be construed as limiting the invention.

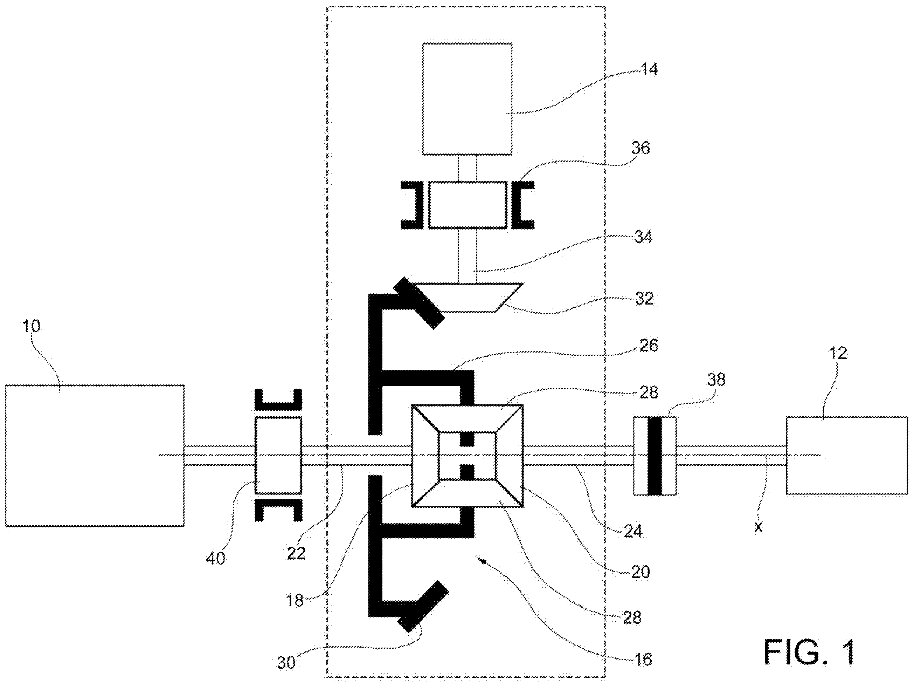

With reference first to Figure 1, a vehicle propulsion system according to the invention comprises a heat engine 10, a transmission unit 12 (which may indifferently be a manual or automatic transmission unit) for transmitting to the vehicle wheels (not shown) the power generated by the heat engine 10, an auxiliary power unit 14 for storing and/or releasing energy and a planetary gear set 16 which is interposed between the heat engine 10 and the transmission unit 12 and is also connected to the auxiliary power unit 14.

According to the proposed embodiment, the planetary gear set 16 comprises a pair of sun gears 18 and 20 connected to the heat engine 10 and to the transmission unit 12, respectively. For example, the sun gear 18 is fitted on a first shaft 22 connected to the heat engine 10, while the sun gear 20 is fitted on a second shaft 24 connected to the transmission unit 12. The sun gears 18 and 20 are arranged coaxially to one another and have the same number of teeth.

The planetary gear set 16 further comprises a planet carrier 26 rotatable with respect to the sun gears 18 and 20 about the same axis of rotation of the latter, which axis of rotation coincides with the longitudinal axis (indicated at x in Figure 1) of the first shaft 22 and of the second shaft 24. The planet carrier 26 carries a plurality of planet gears 28, in particular two planet gears 28, each of which meshes with both the sun gears 18 and 20 and is idly rotatable about a respective axis of rotation which is fixed for rotation with the planet carrier 26 and lies on a plane perpendicular to the longitudinal axis x. The planetary gear set 16 is therefore of the so-called type with orthogonal axes.

The planetary gear set 16 further comprises a ring gear 30 fixed for rotation with the planet carrier 26. The ring gear 30 meshes with an auxiliary gear 32 connected to the auxiliary power unit 14, for example fitted on an auxiliary shaft 34 connected to the auxiliary power unit 14.

The propulsion system further comprises a locking device 36 for locking the planetary gear set 16. More specifically, the locking device 36 is adapted to lock the rotation of the auxiliary shaft 34, and therefore also of the auxiliary gear 32 mounted on that shaft, and thus lock the rotation of the ring gear 30 and the planet carrier 26 of the planetary gear set 16.

The locking device 36 is shiftable between a first position and a second position.

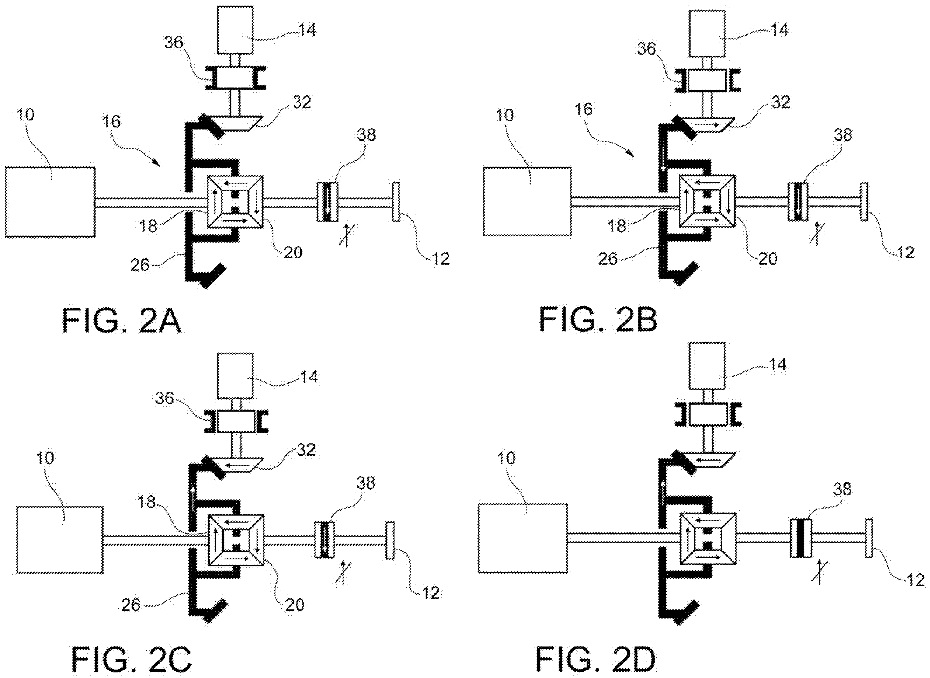

In the first position, the locking device 36 prevents the rotation of the auxiliary gear 32, and therefore also of the ring gear 30 and of the planet carrier 26 of the planetary gear set 16. In this position, the planetary gear set 16 has only one degree of freedom. The auxiliary power unit 14 does not exchange power with the planetary gear set 16, and all the power generated by the heat engine 10 is transmitted to the transmission unit 12 by means of the planetary gear set 16. Such an operating condition is shown in Figure 2A. In this operating condition, a torque which is transmitted via the planets 28 from the sun gear 18 to the sun gear 20 and has the same module as the torque on the sun gear 18 (and therefore as the torque generated by the heat engine 10), acts on the transmission unit 12, but in the opposite direction. The same applies to the speeds of the two sun gears 18 and 20, which will have the same values, but opposite directions. The power generated by the heat engine 10 is therefore transferred to the transmission unit 12 with a transmission ratio equal to 1, without therefore altering the torque and number of revolutions characteristics of the heat engine 10 on the input side of the transmission unit 12.

In the second position, the locking device 36 allows the rotation of the auxiliary gear 32, and therefore of the ring gear 30 and of the planet carrier 26 of the planetary gear set 16. In this position, the planetary gear set 16 has two degrees of freedom. The auxiliary power unit 14 is capable of exchanging power with the planetary gear set 16. Therefore, in this operating condition it is possible, alternatively, to send power from the transmission unit 12 to the auxiliary power unit 14 when the transmission unit 12 rotates at a speed higher than that of the heat engine 10, to draw power from the heat engine 10 and send it to the auxiliary power unit 14 when the heat engine 10 rotates at a speed higher than that of the transmission unit 12, or also to send power from the auxiliary power unit 14 to the transmission unit 12.

When the heat engine 10 is driven by the vehicle, during the releasing phase, and there is a need to recover energy, the locking device 36 is disengaged (i.e. moved to the second position defined above) to let the planet carrier 26 free to rotate (as shown in Figure 2B). In this operating condition, the speed of the sun gear 18 and the torque acting thereon coincide with those of the heat engine 10, while the speed of the sun gear 20, related to the forward speed of the vehicle, will be, in absolute value, greater than or equal to that of the sun gear 18, and the torque will be substantially equal and opposite to that acting on the sun gear 18. Furthermore, in this operating condition, the torque transmitted by the sun gears 18 and 20 to the planet carrier 26 has a module twice that of the motion resistance torque of the heat engine 10 and the same direction as the latter. Therefore, the power recovered will be equal to the product of such torque by the speed of rotation of the planet carrier 26.

Until the module of the rotational speed of the sun gear 18 (i.e. of the sun gear connected to the heat engine 10) is smaller than the module of the rotational speed of the sun gear 20 (i.e. of the sun gear connected to the transmission unit 12), it is possible to generate power for the auxiliary power unit 14, by adjusting the speed of the planet carrier 26 based on the difference between the rotational speeds of the two sun gears 18 and 20, and by keeping the torque constantly equal and opposite to the motion resistance torque of the heat engine 10 corresponding to the minimum number of revolutions compatible with a speedy recovery of the generation of driving torque. Therefore, the propulsion system according to the invention allows to have dragging phases with the heat engine 10 running at lower speeds than those which would usually occur without the system. When the heat engine 10 is driven, therefore, a lesser amount of kinetic or potential energy of the vehicle is dissipated than in the prior art.

Naturally, what is stated in the present description, with regard to the link between the physical magnitudes related to the motion of the various components of the system (such as torque, rotational speed, power, etc.), has merely illustrative purposes and serves to give an exclusively qualitative indication of some of the possible operating modes of the system. Therefore, when reference is made for example to the relations between the rotational speeds or between the torques acting on the planet gears or the sun gears, this is only intended to explain, by means of an analytical model, the operation of the system in that particular configuration, without thereby limiting it to the exact value that magnitude would take in the theoretical model.

The propulsion system of the invention allows to draw energy also during the traction phases. With reference to Figure 2C, if the locking device 36 is disengaged, in order to counter the effect of the torque of the heat engine 10 on the planet carrier 26, which has a positive sign, it is necessary to generate a negative reaction torque. Therefore, it is possible to draw energy from the heat engine 10, providing the planet carrier 26 with a positive speed, by adjusting the load of the auxiliary power unit 14 (for example, by means of an electronic control unit). Accordingly, the heat engine 10 will have to run at a speed higher than that of the second sun gear 20, which is instead related to the forward speed of the vehicle.

The energy taken from the auxiliary power unit 14, both during the releasing phases and during the traction phases, if converted into electric power, may be used to recharge the car battery, thus making the installation of an alternator on board of the vehicle unnecessary.

Preferably, the auxiliary power unit 14 comprises an accumulator (not shown) configured to store the energy transferred to the auxiliary power unit 14. The accumulator may be a battery (with which it is possible, for example, to supply also the conventional electric systems of the vehicle) or a tank containing fluid under pressure, etc.

According to an embodiment, the propulsion system further comprises an overrunning clutch 38, arranged on the second shaft 24 between the planetary gear set 16 and the transmission unit 12. The overrunning clutch 38 may conveniently be used to start the heat engine 10. Figure 2D shows an operating condition in which a positive rotation of the planet carrier 26 may be obtained, by means of a positive torque applied by the auxiliary power unit 14 to the planet carrier itself, which would result in a positive rotation of both the sun gear 18 and of the sun gear 20. The sun gear 18 is free to rotate, and therefore the heat engine 10 is driven and may be started, whereas the sun gear 20 is prevented by the overrunning clutch 38 from rotating. Once the engine has been started, the planet carrier 26 may be stopped, while the sun gear 20 may rotate in the direction allowed by the overrunning clutch 38, even if the vehicle is not running with the gearbox in neutral.

According to an embodiment, the propulsion system further comprises a braking device 40, interposed between the planetary gear set 16 and the heat engine 10 to allow to increase the motion resistance torque of the heat engine 10. The provision of the braking device 40 allows, for example, to carry out the energy recovery function during a heavy deceleration, which may be caused by a strong braking action.

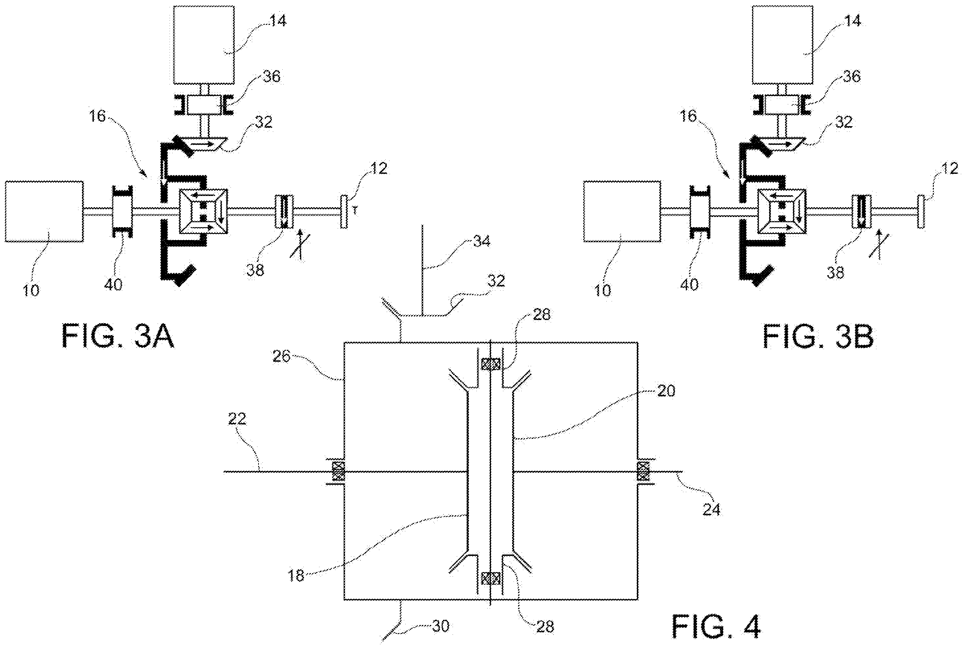

With reference to the operating condition shown in Figure 3A, during braking the sun gear 18 may undergo a gradual speed reduction until stopping, with an appropriate modulation of the braking action. On the sun gear 20, which rotates at a speed related to the forward speed of the vehicle, a torque acts with a module equal to that of the motion resistance torque of the heat engine 10 plus the torque generated by the braking device 40. It is therefore possible to transfer higher power to the auxiliary power unit 14 than in the operating condition shown in Figure 2B, as the torque on the planet carrier 26 is no longer related to the motion resistance torque of the heat engine 10 only. Due to the energies involved in this operating condition, a power of tens of kW may be transferred to the auxiliary power unit 14, recovering a significant part of the change in the kinetic energy of the vehicle during the brief duration of the braking phase.

If the auxiliary power unit 14 is configured so as to generate sufficient power levels, the propulsion system may also be used to drive the vehicle by means of the power generated by the auxiliary power unit 14 alone (as shown, for example, in Figure 3B), with the heat engine 10 being kept still by means of the braking device 40 and the transmission unit 12 operating with a suitable transmission ratio.

Optionally, the propulsion system comprises a further overrunning clutch (not shown), which is interposed between the planetary gear set 16 and the heat engine 10 and may act alternatively to, or in combination with, the braking device 40. If, for example, there is no need to keep the heat engine 10 running when energy is recovered during braking, the function of the braking device 40 may be performed by this further overrunning clutch, which would prevent negative rotations of the crankshaft of the heat engine 10, without the need for the control system to intervene.

In the end, therefore, when the locking device 36 is in the first position defined above, all the power generated by the heat engine 10 is transferred to the transmission unit 12.

By switching the locking device 36 to the second position, when the transmission unit 12 rotates at a speed higher than that of the heat engine 10, it is possible to send power from the transmission unit 12 to the auxiliary power unit 14.

With the locking device 36 still in the second position, by modulating the load absorbed by the auxiliary power unit 14 it is possible to obtain the minimum rotational speed established for the heat engine 10 for any transmission ratio engaged, to recover power from the transmission unit 12 and send it to the auxiliary power unit 14, when the heat engine 10 is in the accelerator releasing phase.

Furthermore, with the locking device 36 in the second position, by modulating the load absorbed by the auxiliary power unit 14 it is possible to obtain a rotational speed for the heat engine 10 higher than that required for a predetermined forward speed of the vehicle, whatever the transmission ratio engaged at that time is, to draw power from the heat engine 10 and send it to the auxiliary power unit 14, when the heat engine 10 is in traction phase.

Still with the locking device 36 in the second position, it is possible to modulate the load absorbed by the auxiliary power unit 14 and the additional load provided by the braking device 40 to obtain the minimum rotational speed established for the heat engine 10, whatever the transmission ratio engaged at that time is, to draw power from the transmission unit 12 and send it to the auxiliary power unit 14, when the vehicle is in braking phase.

By keeping the locking device 36 in the second position and modulating the load generated by the auxiliary power unit 14 it is possible to obtain the rotational speed required for starting the heat engine 10.

With the locking device 36 in the second position, it is possible to modulate the load generated by the auxiliary power unit 14 to set the transmission unit 12 into rotation while holding the heat engine 10 still by means of the braking device 40 and/or by means of the further overrunning clutch, when the vehicle is to be moved with the energy available in the auxiliary power unit 14.

Conveniently, the electronic control unit (which may be the same electronic control unit of the heat engine or an additional electronic control unit) acquires data from one or more among the vehicle speed, the current transmission ratio, the number of revolutions of the heat engine, the position of the accelerator pedal and the position of the brake pedal, and determines the rotational speed to be set for the planet carrier 26 based on the load level of the auxiliary power unit 14 (conveniently, by means of the associated accumulator).

Furthermore, according to an embodiment of the invention, the electronic control unit allows to supply the power generated by the auxiliary power unit 14 so that the vehicle works with the heat engine 10 inactive, when the auxiliary power unit 14 (or the accumulator associated therewith) has a sufficient load level to support the motion of the vehicle, according to the driver's requests.

Naturally, the principle of the invention remaining unchanged, the embodiments and constructional details may vary widely from those described and illustrated purely by way of non-limiting example, without thereby departing from the scope of the invention as defined in the enclosed claims.

## Claims

1. Vehicle propulsion system comprising:
a heat engine (10);
an auxiliary power unit (14) for storing and/or supplying energy;
a transmission unit (12) for transmitting to the vehicle wheels the power supplied by the heat engine (10) and/or by the auxiliary power unit (14); and
a planetary gear set (16) which is interposed between the heat engine (10) and the transmission unit (12) and is connected to the auxiliary power unit (14);
a locking device (36) which is associated with the planetary gear set (16) and is shiftable between a first position and a second position, wherein in said first position the locking device (36) locks a rotating element (26) of the planetary gear set (16), so that the planetary gear set (16) has one single degree of freedom and therefore the auxiliary power unit (14) does not exchange power with the planetary gear set (16), while in said second position the locking device (36) allows the rotation of said rotating element (26) of the planetary gear set (16), so that the planetary gear set (16) has two degrees of freedom and therefore the auxiliary power unit (14) exchanges power with the planetary gear set (16); and **characterised by** further comprising: a braking device (40) which is interposed between the planetary gear set (16) and the heat engine (10) and is configured to modulate the motion resistance torque of the heat engine (10).

2. Propulsion system according to claim 1, further comprising an auxiliary shaft (34) connecting the auxiliary power unit (14) to the planetary gear set (16), wherein the locking device (36) is associated with said auxiliary shaft (34) so that in said first position the locking device (36) prevents said auxiliary shaft (34) form rotating, whereby all the power supplied by the heat engine (10) is transmitted to the transmission unit (12) via the planetary gear set (16), while in said second position the locking device (36) allows said auxiliary shaft (34) to rotate, so that the propulsion system is capable of working alternatively in a first operating condition wherein power is transferred from the transmission unit (12) to the auxiliary power unit (14), in a second operating condition wherein power is transferred from the heat engine (10) to the auxiliary power unit (14), and in a third operating condition wherein power is transferred from the auxiliary power unit (14) to the transmission unit (12).

3. Propulsion system according to claim 2, wherein the planetary gear set (16) comprises a pair of sun gears (18, 20) connected to the heat engine (10) and to the transmission unit (12), respectively, a plurality of planet gears (28) meshing with said pair of sun gears (18, 20), a planet carrier (26) on which the planet gears (28) are mounted so as to be idly rotatable, and a ring gear (30) fixed for rotation with the planet carrier (26), and wherein the propulsion system further comprises an auxiliary gear (32) fitted on the auxiliary shaft (34) and meshing with the ring gear (30) of the planetary gear set (16), whereby in said first position the locking device (36) prevents said auxiliary gear (32) from rotating, thus preventing the ring gear (30) and the planet carrier (26) of the planetary gear set (16) from rotating, while in said second position the locking device (36) allows said auxiliary gear (32) to rotate, thus allowing the ring gear (30) and the planet carrier (26) of the planetary gear set (16) to rotate.

4. Propulsion system according to any one of the preceding claims, wherein the auxiliary power unit (14) comprises storing means for storing the energy transmitted to the auxiliary power unit (14).

5. Propulsion system according to claim 4, wherein said storing means comprise a battery or a tank containing fluid under pressure.

6. Propulsion system according to any one of the preceding claims, further comprising a first overrunning clutch (38) interposed between the planetary gear set (16) and the transmission unit (12).

7. Propulsion system according to claim 6, further comprising a second overrunning clutch interposed between the planetary gear set (16) and the heat engine (10).

## Patentansprüche

1. Fahrzeugantriebssystem mit:
einer Wärmekraftmaschine (10);
einer Hilfsleistungseinheit (14) zum Speichern und/oder Zuführen von Energie;
einer Übertragungseinheit (12) zum Übertragen der Leistung, die durch die Wärmekraftmaschine (10) und/oder durch die Hilfsleistungseinheit (14) zugeführt wird, an die Fahrzeugräder; und
einem Planetenradsatz (16), der zwischen der Wärmekraftmaschine (10) und der Übertragungseinheit (12) eingefügt ist und mit der Hilfsleistungseinheit (14) verbunden ist;
einer Arretierungsvorrichtung (36), die mit dem Planetenradsatz (16) assoziiert ist und zwischen einer ersten Position und einer zweiten Position umschaltbar ist, bei der in besagter ersten Position die Arretierungsvorrichtung (36) ein rotierendes Element (26) des Planetenradsatzes (16) arretiert, so dass der Planetenradsatz (16) einen einzelnen Freiheitsgrad aufweist und daher die Hilfsleistungseinheit (14) nicht Leistung mit dem Planetenradsatz (16) austauscht, während in besagter zweiten Position die Arretierungsvorrichtung (36) die Rotation besagten rotierenden Elements (26) des Planetenradsatzes (16) erlaubt, so dass der Planetenradsatz (16) zwei Freiheitsgrade aufweist und daher die Hilfsleistungseinheit (14) Leistung mit dem Planetenradsatz (16) austauscht; und **dadurch gekennzeichnet, dass** es ferner aufweist:
eine Bremsvorrichtung (40), die zwischen dem Planetenradsatz (16) und der Wärmekraftmaschine (10) eingefügt ist und dazu ausgebildet ist, das Bewegungswiderstanddrehmoment der Wärmekraftmaschine (10) zu modulieren.

2. Antriebssystem nach Anspruch 1, ferner mit einer Hilfswelle (34), die die Hilfsleistungseinheit (14) mit dem Planetenradsatz (16) verbindet, bei dem die Arretierungsvorrichtung (36) mit besagter Hilfswelle (34) assoziiert ist, so dass in besagter ersten Position die Arretierungsvorrichtung (36) besagte Hilfswelle (34) daran hindert, zu rotieren, wodurch die gesamte Leistung, die durch die Wärmekraftmaschine (10) zugeführt wird, an die Übertragungseinheit (12) über den Planetenradsatz (16) übertragen wird, während in besagter zweiten Position die Arretierungsvorrichtung (36) der Hilfswelle (34) erlaubt, zu rotieren, so dass das Antriebssystem imstande ist, alternativ in einem ersten Betriebszustand, in dem Leistung von der Übertragungseinheit (12) an die Hilfsleistungseinheit (14) übertragen wird, in einem zweiten Betriebszustand, in dem Leistung von der Wärmekraftmaschine (10) an die Hilfsleistungseinheit (14) übertragen wird, und in einem dritten Betriebszustand, in dem Leistung von der Hilfsleistungseinheit (14) an die Übertragungseinheit (12) übertragen wird, zu arbeiten.

3. Antriebssystem nach Anspruch 2, bei dem der Planetenradsatz (16) ein Paar Sonnenräder (18, 20), die mit der Wärmekraftmaschine (10) bzw. der Übertragungseinheit (12) verbunden sind, eine Mehrzahl von Planetenrädern (28), die mit besagtem Paar Sonnenräder (18, 20) kämmen, einen Planetenträger (26), auf dem die Planetenräder (28) so montiert sind, dass sie frei rotierbar sind, und ein Hohlrad (30), das zur Rotation mit dem Planetenträger (26) befestigt ist, aufweist, und bei dem das Antriebssystem ferner ein Hilfszahnrad (32), das auf der Hilfswelle (34) angebracht ist und mit dem Hohlrad (30) des Planetenradsatzes (16) kämmt, aufweist, wodurch in besagter ersten Position die Arretierungsvorrichtung (36) besagtes Hilfszahnrad (32) daran hindert, zu rotieren, so dass sie somit das Hohlrad (30) und den Planetenträger (26) des Planetenradsatzes (16) daran hindert, zu rotieren, während in besagter zweiten Position die Arretierungsvorrichtung (36) besagtem Hilfszahnrad (32) erlaubt, zu rotieren, so dass sie somit dem Hohlrad (30) und dem Planetenträger (26) des Planetenradsatzes (16) erlaubt, zu rotieren.

4. Antriebssystem nach einem der vorhergehenden Ansprüche, bei dem die Hilfsleistungseinheit (14) Speichermittel zum Speichern der Energie, die an die Hilfsleistungseinheit (14) übertragen wird, aufweist.

5. Antriebssystem nach Anspruch 4, bei dem besagtes Speichermittel eine Batterie oder einen Tank, der ein Fluid unter Druck enthält, aufweist.

6. Antriebssystem nach einem der vorhergehenden Ansprüche, ferner mit einer ersten Freilaufkupplung (38), die zwischen dem Planetenradsatz (16) und der Übertragungseinheit (12) eingefügt ist.

7. Antriebssystem nach Anspruch 6, ferner mit einer zweiten Freilaufkupplung, die zwischen dem Planetenradsatz (16) und der Wärmekraftmaschine (10) eingefügt ist.

## Revendications

1. Système de propulsion de véhicule comprenant :
un moteur thermique (10) ;
une unité d'alimentation auxiliaire (14) pour stocker /ou apporter de l'énergie ;
une unité de transmission (12) pour transmettre aux roues de véhicule la puissance apportée par le moteur thermique (10) et/ou par l'unité d'alimentation auxiliaire (14) ; et
un train épicycloïdal (16) qui est interposé entre le moteur thermique (10) et l'unité de transmission (12) et est relié à l'unité d'alimentation auxiliaire (14) ;
un dispositif de verrouillage (36) qui est associé au train épicycloïdal (16) et peut être déplacé entre une première position et une deuxième position, dans lequel dans ladite première position le dispositif de verrouillage (36) verrouille un élément rotatif (26) du train épicycloïdal (16), de telle sorte que le train épicycloïdal (16) présente un unique degré de liberté et par conséquent l'unité d'alimentation auxiliaire (14) n'échange pas de puissance avec le train épicycloïdal (16), tandis que dans ladite deuxième position le dispositif de verrouillage (36) permet la rotation dudit élément rotatif (26) du train épicycloïdal (16), de telle sorte que le train épicycloïdal (16) présente deux degrés de liberté et par conséquent l'unité d'alimentation auxiliaire (14) échange de la puissance avec le train épicycloïdal (16) ;
et **caractérisé en ce qu'**il comprend en outre :
un dispositif de freinage (40) qui est interposé entre le train épicycloïdal (16) et le moteur thermique (10) et est conçu pour moduler le couple de résistance au mouvement du moteur thermique (10).

2. Système de propulsion selon la revendication 1, comprenant en outre un arbre auxiliaire (34) raccordant l'unité d'alimentation auxiliaire (14) au train épicycloïdal (16), dans lequel le dispositif de verrouillage (36) est associé audit arbre auxiliaire (34) de telle sorte que dans ladite première position le dispositif de verrouillage (36) empêche ledit arbre auxiliaire (34) de tourner, dans lequel toute la puissance apportée par le moteur thermique (10) est transmise à l'unité de transmission (12) via le train épicycloïdal (16), tandis que dans ladite deuxième position le dispositif de verrouillage (36) permet audit arbre auxiliaire (34) de tourner, de telle sorte que le système de propulsion est capable de fonctionner alternativement dans un premier état de fonctionnement dans lequel la puissance est transférée de l'unité de transmission (12) à l'unité d'alimentation auxiliaire (14), dans un deuxième état de fonctionnement dans lequel la puissance est transférée du moteur thermique (10) à l'unité d'alimentation auxiliaire (14), et dans un troisième mode de fonctionnement dans lequel la puissance est transférée de l'unité d'alimentation auxiliaire (14) à l'unité de transmission (12).

3. Système de propulsion selon la revendication 2, dans lequel le train épicycloïdal (16) comprend une paire de planétaires (18, 20) raccordés au moteur thermique (10) et à l'unité de transmission (12), respectivement, une pluralité de satellites (28) s'emboîtant avec ladite paire de planétaires (18, 20), un porte-satellites (26) sur lequel sont montés les satellites (28) de manière à pouvoir tourner librement, et une couronne dentée (30) fixée pour rotation au porte-satellites (26), et dans lequel le système de propulsion comprend en outre un engrenage auxiliaire (32) ajusté sur l'arbre auxiliaire (34) et s'emboîtant avec la couronne dentée (30) du train épicycloïdal (16), dans lequel dans ladite première position le dispositif de verrouillage (36) empêche ledit engrenage auxiliaire (32) de tourner, empêchant ainsi la couronne dentée (30) et le porte-satellites (26) du train épicycloïdal (16) de tourner, tandis que dans ladite deuxième position le dispositif de verrouillage (36) permet audit engrenage auxiliaire (32) de tourner, permettant ainsi à la couronne dentée (30) et au porte-satellites (26) du train épicycloïdal (16) de tourner.

4. Système de propulsion selon l'une quelconque des revendications précédentes, dans lequel l'unité d'alimentation auxiliaire (14) comprend un moyen de stockage pour stocker l'énergie transmise à l'unité d'alimentation auxiliaire (14).

5. Système de propulsion selon la revendication 4, dans lequel ledit moyen de stockage comprend une batterie ou un réservoir contenant du fluide sous pression.

6. Système de propulsion selon l'une quelconque des revendications précédentes, comprenant en outre un premier embrayage à roue libre (38) interposé entre le train épicycloïdal (16) et l'unité de transmission (12).

7. Système de propulsion selon la revendication 6, comprenant en outre un deuxième embrayage à roue libre interposé entre le train épicycloïdal (16) et le moteur thermique (10).
